# FASCICULE DE BREVET EUROPEEN

(11) **EP 2 050 603 B1**
(45) Date de publication et mention de la délivrance du brevet: **14.12.2011**
(21) Numéro de dépôt: 08166602.6
(22) Date de dépôt: 14.10.2008
(51) Int. Cl.: B60J 1/20

(54) **Store à enrouleur pour véhicule automobile, à élément d'accrochage clippé et maintenu sur son support, support et véhicule correspondants.**
Rollo mit Aufwickelvorrichtung für Kraftfahrzeug, das mit einem mit Clips versehenen Befestigungssystem auf dem Rahmen ausgestattet ist, entsprechender Rahmen und entsprechendes Fahrzeug
Roller blind for an automobile, with hooking element clipped and maintained on its support, corresponding support and vehicle.

(30) Priorité: 19.10.2007 FR 0758448
(43) Date de publication de la demande: 22.04.2009
(73) Titulaire: Advanced Comfort Systems France SAS - ACS France, 79300 Bressuire (FR)
(72) Inventeur: Juge, Xavier, 49120 Saint Georges Des Gardes (FR)
(74) Mandataire: Bioret, Ludovic

(56) Documents cités:
- DE-A1-102006 017 538
- FR-A- 2 873 955
- US-A- 5 072 769

## Description

### 1. Domaine de l'invention

Le domaine de l'invention est celui des stores à enrouleur, notamment pour véhicules automobiles (tels que les voitures, les véhicules utilitaires, les camions, les autobus, ....). Plus précisément, l'invention concerne le montage de tels stores.

### 2. Solutions et inconvénients de l'art antérieur

On installe souvent des stores à enrouleur dans les véhicules automobiles, notamment pour l'occultation des vitres latérales, de custode ou de la vitre arrière pour protéger l'habitacle et ses occupants du soleil. Plus récemment, on a également proposé des véhicules dont le pavillon présente un ou plusieurs surfaces vitrées des pavillons équipées également d'un ou de plusieurs stores à enrouleur. Des stores à enrouleur sont également proposés pour d'autres applications, tels que les cache-bagages, les coupe-vent, ...

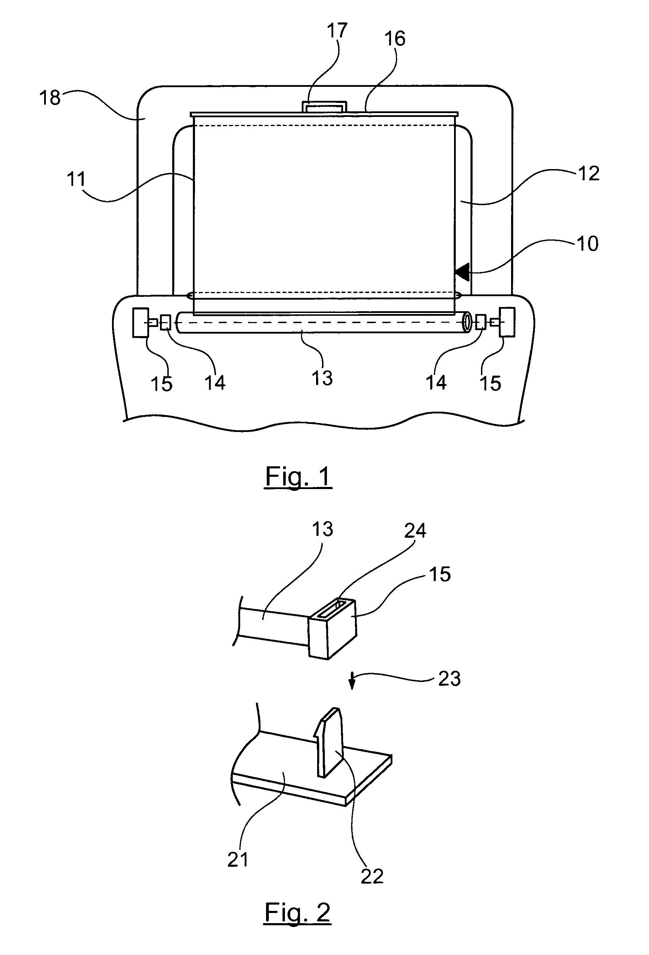

Comme présenté de façon schématique sur la figure 1 (dans une application pour une vitre latérale), un store à enrouleur 10 comprend généralement une toile d'occultation 11 (autrement appelé rideau), formant écran en position déployée, devant une vitre 12 du véhicule automobile 18. Une des extrémités de la toile 11 est solidaire d'un tube enrouleur 13 dont les extrémités sont montées sur des paliers 14 s'enchâssant dans des porte-paliers 15. L'autre extrémité de la toile est fixée à une barre de tirage 16 pouvant être entraînée manuellement à l'aide d'une poignée de préhension 17, ou motorisée. Lors du passage de la position déployée à la position repliée, la toile 11 reste tendue grâce à un ressort de rappel permettant d'enrouler celle-ci autour du tube enrouleur 13.

Une difficulté du montage des stores est que les véhicules automobiles produits en série présentent entre eux des variations dimensionnelles relativement importantes.

Par ailleurs, afin de s'adapter à la tendance actuelle en matière de véhicules automobiles consistant à proposer des surfaces vitrées de plus en plus importantes par exemple au niveau du pavillon, pour donner une impression de volume et de confort aux occupants du véhicule et permettre que l'intérieur de l'habitacle soit plus lumineux, il est souvent nécessaire de réaliser des stores de grandes dimensions notamment pour occulter une ou plusieurs vitres de dimension importante.

L'augmentation de la taille des stores s'accompagne inévitablement, pour maintenir leur coût de fabrication acceptable, d'une augmentation des tolérances sur les dimensions des éléments du store, qui génère des jeux après assemblage des éléments ou qui rend plus difficile le montage. De tels jeux peuvent être à l'origine de problèmes de positionnement et d'une gêne sonore, par exemple du fait de la perception d'un bruit de cliquetis lors du déplacement du véhicule, qui peuvent également donner une impression d'un store de qualité moindre, ce qui n'est pas acceptable.

Selon une technique connue, les porte-paliers sont montés sur un boîtier, ou support, qui se fixe sur la structure du véhicule.

On a proposé plusieurs solutions pour solidariser les porte-paliers sur un boîtier. L'assemblage par vissage, rivetage, ou collage présente l'inconvénient de ne pas permettre un démontage aisé des porte-paliers. Le clippage permet en revanche de s'affranchir de cet inconvénient.

On présente, en référence à la figure 2, un store de type connu correspondant à l'état de la technique divulgué par le document FR 2 873 955 A, dont les porte-paliers sont montés sur des clips prévus sur leur support, qui se présente sous la forme d'un boîtier de store. Comme illustré sur cette figure dans une vue de détail d'une extrémité du store, le boîtier 21 de store comprend un clip 22 sur lequel on enclipse, suivant le sens de la flèche 23, l'un des porte-paliers 15 du store pour l'accrocher au boîtier au travers d'une ouverture 24 prévue dans celui-ci.

De façon à permettre le fléchissement nécessaire du clip 22 lors du clippage, le boîtier 21 est réalisé en matière plastique, par exemple moulé par injection.

On a constaté qu'un tel clip qui doit par ailleurs présenter une rigidité suffisante pour maintenir convenablement les porte-paliers sur le boîtier, est trop fragile et peut se rompre après quelques démontages du fait de sa rigidité, ce qui n'est pas satisfaisant.

### 3. Objectifs de l'invention

L'invention a notamment pour objectif de pallier ces inconvénients de l'art antérieur.

Plus précisément, un objectif de l'invention est de fournir un support de tube enrouleur de store suffisamment rigide. Dans au moins un mode de réalisation particulier, l'invention a en outre pour objectif de fournir des moyens d'accrochage du tube enrouleur suffisamment efficaces.

Un autre objectif de l'invention est de fournir une telle technique de store à enrouleur dont le tube à enrouleur peut être démonté fréquemment sans détérioration du support du tube.

L'invention a encore pour objectif de fournir une telle technique qui soit simple à mettre en oeuvre et pour un faible coût. Notamment, un objectif de l'invention est de garantir un montage simple et efficace.

Encore un autre objectif de l'invention est de fournir une telle technique qui permette d'assurer un positionnement convenable du tube enrouleur par rapport à son support, et en particulier qui permet d'empêcher son inclinaison par rapport à l'axe de ce support, et les inconvénients correspondants.

### 4. Exposé de l'invention

Ces objectifs, ainsi que d'autres qui apparaîtront par la suite, sont atteints à l'aide d'un store à enrouleur pour véhicule automobile, comprenant une toile mobile entre une position repliée et au moins une position déployée, dont une extrémité est solidaire d'un tube enrouleur, chacune des extrémités dudit tube coopérant avec un élément d'accrochage, destiné à être solidarisé à des moyens de solidarisation correspondant prévus à cet effet sur un support.

Selon l'invention, au moins un desdits moyens de solidarisation comprend d'une part un élément de clippage destiné à immobiliser un desdits éléments d'accrochage, et d'autre part un élément de positionnement et de maintien dudit élément d'accrochage, ledit élément de positionnement et de maintien étant plus rigide que ledit élément de clippage.

Ainsi, l'invention propose une solution technique simple et efficace pour positionner et maintenir le tube enrouleur de façon satisfaisante sur le support du store, qui, par ailleurs, permet un montage et un démontage aisé du tube enrouleur. D'autre part, la solidité du support est augmentée.

Préférentiellement, un tel store comprend deux moyens de solidarisation symétriques.

Ainsi on peut solidariser convenablement chacun des éléments d'accrochage sur le support. Il peut cependant également être envisagé de prévoir des moyens de solidarisations non symétriques sans sortir du cadre de l'invention.

Selon une caractéristique préférentielle, ledit élément de positionnement et de maintien pénètre dans une lumière prévue sur lesdits éléments d'accrochage lorsque ledit élément d'accrochage est solidarisé auxdits moyens de solidarisation.

De façon avantageuse, la tête dudit élément de clippage est en appui sur au moins une partie d'une surface de l'élément d'accrochage orientée dans la direction de déploiement de ladite toile lorsque ledit élément d'accrochage est solidarisé auxdits moyens de solidarisation.

Ainsi, le tube enrouleur est convenablement immobilisé dans la direction où s'exercent la plupart des efforts auxquels est soumise la toile.

Selon un aspect particulier de l'invention, l'épaisseur dudit élément de positionnement et de maintien est au moins deux fois supérieure à l'épaisseur du pied dudit élément de clippage.

Dans au moins un mode de réalisation particulier de l'invention, lesdits moyens de solidarisation et ledit support forment un ensemble monobloc.

Ainsi, cet ensemble peut être obtenu par des procédés de fabrication adaptés à la production en grande série, donnant en outre satisfaction en matière de précision et de coût, tels que, par exemple le moulage par injection.

Dans au moins un autre mode de réalisation particulier de l'invention, ledit élément de clippage est en matière plastique souple, et ledit support et/ou ledit élément de positionnement et de maintien sont réalisés en métal ou dans un alliage métallique.

Ainsi, notamment, le support et/ou le ou les éléments de positionnement et de maintien restent relativement peu sensibles aux effets de dilatation thermique dans les conditions d'utilisation, ce qui prévient l'apparition de jeux préjudiciables au bon fonctionnement du store ou à la perception de sa qualité.

L'invention concerne également un support de tube enrouleur de store sur lequel sont prévus des moyens de solidarisation tels que décrits ci-dessus.

L'invention concerne encore un véhicule automobile comprenant au moins un store tel que décrit précédemment.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre les éléments constitutifs d'un store dont la toile est déployée le long d'une vitre de portière, l'assemblage du tube enrouleur de ce store avec ses porte-paliers étant représenté suivant une représentation en éclaté ;
- la figure 2 présente le détail de la fixation d'un porte palier sur un boîtier de store de l'art antérieur ;
- la figure 3 illustre un premier mode de réalisation d'un store l'invention, dans une vue de détail de la zone d'un élément d'accrochage avant solidarisation sur le support ;
- la figure 4 est une vue en coupe du support présenté à la figure 3.

### 6. Description d'un mode de réalisation de l'invention

### 6.1. Rappel du principe de l'invention

Le principe général de l'invention repose donc sur la mise en oeuvre dans un store à enrouleur de moyens de solidarisation du tube enrouleur sur un support présentant à la fois un élément suffisamment souple pour permettre un clippage et un élément de positionnement et de maintien d'une rigidité convenable, de façon à garantir un bon fonctionnement et un montage ou un démontage aisé du tube.

### 6.2. Exemple de mode de réalisation de l'invention

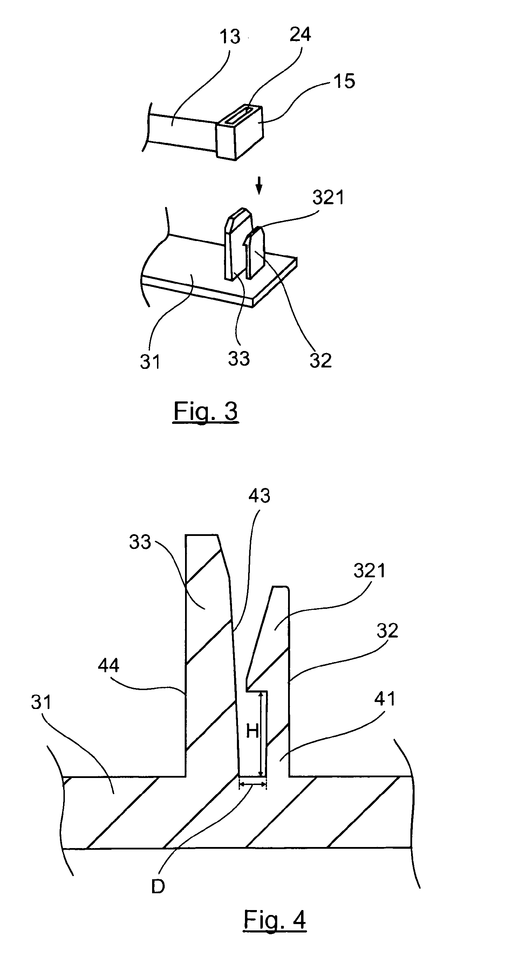

On présente un mode de réalisation particulier de l'invention en relation avec la figure 3, qui précise le détail de la solidarisation sur un support 31 d'un élément d'accrochage 15 d'une extrémité d'un tube enrouleur 13 de store, se présentant sous la forme d'un porte-palier.

Le support monobloc 31, réalisé par injection en matière acrylonitrile butadiène styrène-polycarbonate (ABS-PC), présente une plaque, ou platine, sensiblement rectangulaire hors de laquelle saillissent des moyens de solidarisation avec l'élément d'accrochage 15 comprenant un élément de positionnement et de maintien 33 et un élément de clippage 32.

On note que dans ce mode de réalisation particulier de l'invention, le support 31 comprend également à son extrémité gauche des moyens de solidarisation de l'autre élément d'accrochage du tube enrouleur, qui se déduisent des moyens de solidarisation représentés sur la figure 3 par simple symétrie.

Comme indiqué par la flèche représentée sur la figure 3, on solidarise l'élément d'accrochage 15 au support 31 en insérant la lumière 24 de section rectangulaire sur la partie supérieure biseautée de l'élément de positionnement et de maintien 33 puis en faisant coulisser l'élément d'accrochage en direction de la base de l'élément 33, afin d'écarter dans un premier temps la tête 321 de l'élément de clippage 32 vers l'extérieur du support, puis d'enclipser l'élément d'accrochage 15 sous la tête 321 de l'élément de clippage 32, qui vient alors en appui sur l'élément d'accrochage 15 au niveau du contour supérieur de la lumière 24.

Dans ce mode de réalisation particulier de l'invention, les sections de la lumière 24 et de la base de l'élément 33 sont avantageusement ajustées pour assurer un bon maintien de l'élément d'accrochage 15.

D'autre part, afin de permettre une immobilisation satisfaisante de l'élément d'accrochage 15, la hauteur de cet élément 15 est prévue légèrement inférieure à la hauteur H du pied 41 de l'élément de clippage (voir sur la figure 4 la vue en coupe du support présenté à la figure 3), et l'épaisseur de la paroi extérieure de l'élément d'accrochage 15 entourant la lumière 24 présente une dimension sensiblement égale à la distance D séparant la base de l'élément 33 du pied 41 de l'élément de clippage.

Dans ce mode de réalisation particulier pour lequel le support 31 est surmoulé en matière plastique, la rigidité supplémentaire de l'élément de positionnement et de maintien 33 est notamment conférée par l'épaisseur de sa base qui, comme on peut le voir sur la figure 4 est presque trois fois supérieure à l'épaisseur du pied souple et élastique 41 de l'élément de clippage. Il convient par ailleurs de noter que le maintien de l'élément d'accrochage notamment par les pans 42 et 43 de l'élément 33 prévient l'apparition sur le pied de l'élément de clippage 32 d'efforts de cisaillement pouvant provoquer sa rupture lors de la solidarisation ou de désolidarisation des éléments d'accrochage ou lorsque le store est monté sur le véhicule.

En outre, comme illustré sur la figure 4, le pan 42 présente une inclinaison faible par rapport au pan opposé 43 de l'élément de positionnement et de maintien 33 pour faciliter la solidarisation ou la désolidarisation de l'élément d'accrochage 15 sur le support 31.

### 6.3. Autres caractéristiques et avantages de l'invention

Dans des variantes du mode de réalisation détaillé ci-dessus, il peut également être envisagé sans sortir du cadre de l'invention que :
- l'élément de clippage est en matière plastique souple et que la platine du support et/ou l'élément de positionnement et de maintien sont réalisés en métal ou dans un alliage métallique ;
- les éléments du support (platine, élément(s) de positionnement et de maintien, élément(s) d'accrochage) sont des pièces distinctes assemblées ensemble pour former le support ;

L'invention s'applique bien sûr, également à un store sur le support duquel sont prévus deux moyens de solidarisation non symétriques.

En outre, les stores à enrouleur concernés par l'invention peuvent être mis en oeuvre pour occulter une ou plusieurs surfaces vitrées de véhicule, ou comme cache-bagages, coupe-vent, déflecteur ...

## Revendications

1. Support de tube enrouleur (13) de store, comprenant des moyens de solidarisation destinés à être solidarisés avec un élément d'accrochage (15) coopérant avec une des extrémités dudit tube (13),
**caractérisé en ce que** lesdits moyens de solidarisation comprennent d'une part un élément de clippage (32) destiné à immobiliser ledit élément d'accrochage (15), et d'autre part un élément de positionnement et de maintien (33) dudit élément d'accrochage (15), ledit élément de positionnement et de maintien (33) étant plus rigide que ledit élément de clippage (32).

2. Store à enrouleur pour véhicule automobile, comprenant une toile (11) mobile entre une position repliée et au moins une position déployée, dont une extrémité est solidaire d'un tube enrouleur (13),
**caractérisé en ce qu'**il comprend également un support (31) de tube enrouleur selon la revendication 1,
au moins une des extrémités dudit tube enrouleur (13) coopérant avec un élément d'accrochage (15), solidarisé auxdits moyens de solidarisation (32, 33)dudit support.

3. Store à enrouleur selon la revendication 2, **caractérisé en ce que** ledit support (31) comprend deux moyens de solidarisation symétriques.

4. Store à enrouleur selon l'une quelconque des revendications 2 et 3, **caractérisé en ce que** ledit élément de positionnement et de maintien (33) pénètre dans une lumière (24) prévue sur lesdits éléments d'accrochage (15) lorsque ledit élément d'accrochage (15) est solidarisé auxdits moyens de solidarisation.

5. Store à enrouleur selon l'une quelconque des revendications 2 à 4, **caractérisé en ce que** la tête (321) dudit élément de clippage (32) est en appui sur au moins une partie d'une surface de l'élément d'accrochage (15) orientée dans la direction de déploiement de ladite toile (11) lorsque ledit élément d'accrochage (15) est solidarisé auxdits moyens de solidarisation.

6. Store à enrouleur selon l'une quelconque des revendications 2 à 5, **caractérisé en ce que** l'épaisseur dudit élément de positionnement et de maintien (33) est au moins deux fois supérieure à l'épaisseur du pied dudit élément de clippage (32).

7. Store à enrouleur selon l'une quelconque des revendications 2 à 6, **caractérisé en ce que** lesdits moyens de solidarisation (32, 33) et ledit support (31) forment un ensemble monobloc.

8. Store à enrouleur l'une quelconque des revendications 2 à 6, **caractérisé en ce que** ledit élément de clippage (32) est en matière plastique souple,
et **en ce que** ledit support (31) et/ou ledit élément de positionnement et de maintien (33) sont réalisés en métal ou dans un alliage métallique.

9. Véhicule automobile **caractérisé en ce qu'**il comprend au moins un store à enrouleur selon l'une quelconque des revendications 2 à 8.

## Claims

1. Support for a roller tube (13) of a blind, said support comprising fastening means which are intended to be fastened to a coupling element (15) that cooperates with one of the ends of the said tube (13), **characterised in that** the said fastening means comprise, on the one hand, a clipping element (32) which is intended to immobilise the said coupling element (15) and, on the other hand, an element (33) for positioning and holding the said coupling element (15), the said positioning and holding element (33) being more rigid than the said clipping element (32).

2. Roller blind for a motor vehicle, said blind comprising a cloth (11) which can be moved between a folded-up position and at least one deployed position and of which one end is integral with a roller tube (13),
**characterised in that** it also comprises a roller tube support (31) according to claim 1,
at least one of the ends of the said roller tube (13) cooperating with a coupling element (15) fastened to the said fastening means (32, 33) of the said support.

3. Roller blind according claim 2, **characterised in that** the said support (31) comprises two symmetrical fastening means.

4. Roller blind according to either of claims 2 or 3, **characterised in that** the said positioning and holding element (33) penetrates into an opening (24) provided on the said coupling elements (15) when the said coupling element (15) is fastened to the said fastening means.

5. Roller blind according to any of claims 2 to 4, **characterised in that** the head (321) of the said clipping element (32) rests on at least a part of a surface of the coupling element (15) which is oriented in the direction of deployment of the said cloth (11) when the said coupling element (15) is fastened to the said fastening means.

6. Roller blind according to any of claims 2 to 5, **characterised in that** the thickness of the said positioning and holding element (33) is at least two times greater than the thickness of the foot of the said clipping element (32).

7. Roller blind according to any of claims 2 to 6, **characterised in that** the said fastening means (32, 33) and the said support (31) form a one-piece unit.

8. Roller blind according to any of claims 2 to 6, **characterised in that** the said clipping element (32) is made of flexible plastic material,
and **in that** the said support (31) and/or the said positioning and holding element (33) is/are made of metal or of a metal alloy.

9. Motor vehicle, **characterised in that** it comprises at least one roller blind according to any of claims 2 to 8.

## Patentansprüche

1. Halterung für eine Aufwickelwalze (13) für einen Rollo, der Verbindungsmittel zum Verbinden mit einem Befestigungselement (15) aufweist, das mit einem der Enden der Aufwickelwalze (13) zusammenwirkt, **dadurch gekennzeichnet, dass** die Verbindungsmittel einerseits ein Einrastelement (32) zum Festlegen des Befestigungselementes (15) und andererseits ein Positionier- und Haltemittel (33) des Befestigungselementes (15) umfassen, wobei das Positionier- und Haltemittel (33) steifer ist als das Einrastelement (32).

2. Rollo mit Aufwickelvorrichtung für ein Kraftfahrzeug, der ein Tuch (11) umfaßt, das zwischen einer eingerollten und mindestens einer ausgerollten Position beweglich ist, dessen eines Ende mit einer Aufwickelwalze (13) verbunden ist, **dadurch gekennzeichnet, dass** er weiterhin eine Halterung (31) für die Aufwickelwalze gemäß Anspruch 1 umfaßt, wobei mindestens eines der Enden der Aufwickelwalze (13) mit einem Befestigungselement (15) zusammenwirkt, das mit den Verbindungsmitteln (32, 33) der Halterung zusammenwirkt.

3. Rollo mit Aufwickelvorrichtung gemäß Anspruch 2, **dadurch gekennzeichnet, dass** die Halterung (31) zwei symmetrische Verbindungsmittel aufweist.

4. Rollo mit Aufwickelvorrichtung gemäß einem der Ansprüche 2 bis 3, **dadurch gekennzeichnet, dass** das Positionier- und Haltemittel (33) in eine Öffnung (24) eindringt, die in den Befestigungsmitteln (15) vorgesehen ist, wenn das Befestigungsmittel (15) mit den Verbindungsmitteln verbunden ist.

5. Rollo mit Aufwickelvorrichtung gemäß einem der Ansprüche 2 bis 4, **dadurch gekennzeichnet, dass** der Kopf (321) des Einrastmittels (32) auf mindestens einem Teil der Oberfläche des Befestigungsmittels (15) abgestützt ist, das in Ausrollrichtung des Tuches (11) angeordnet ist, wenn das Befestigungsmittel (15) mit den Verbindungsmitteln verbunden ist.

6. Rollo mit Aufwickelvorrichtung gemäß einem der Ansprüche 2 bis 5, **dadurch gekennzeichnet, dass** die Dicke des Positionier- und Haltemittels (33) mindestens doppelt so groß ist wie die Dicke des Fußes des Einrastelementes (32).

7. Rollo mit Aufwickelvorrichtung gemäß einem der Ansprüche 2 bis 6, **dadurch gekennzeichnet, dass** die Verbindungsmittel (32, 33) und die Halterung (31) einstückig ausgebildet sind.

8. Rollo mit Aufwickelvorrichtung gemäß einem der Ansprüche 2 bis 6, **dadurch gekennzeichnet, dass** das Einrastelement (32) aus weichem Kunststoff besteht und dass die Halterung (31) und/oder das Positionier- und Haltemittel (33) aus Metall oder einer Metalllegierung bestehen.

9. Kraftfahrzeug, **dadurch gekennzeichnet, dass** es mindestens einen Rollo mit Aufwickelvorrichtung gemäß einem der Ansprüche 2 bis 8 aufweist.
